# EUROPÄISCHE PATENTSCHRIFT

(11) **EP 1 180 610 B1**
(45) Veröffentlichungstag und Bekanntmachung des Hinweises auf die Patenterteilung: **26.07.2006**
(21) Anmeldenummer: 01117986.8
(22) Anmeldetag: 25.07.2001
(51) Int. Cl.: F16C 17/04, F16C 35/02, F16D 1/08

(54) **Antriebswellenzusammenbau und Fahrzeug**
Assembling of drive shaft and vehicle
Assemblage d'arbre d'entraînement et véhicule

(30) Priorität: 09.08.2000 US 634189
(43) Veröffentlichungstag der Anmeldung: 20.02.2002
(73) Patentinhaber: DEERE & COMPANY, Moline, Illinois 61265-8098 (US)
(72) Erfinder: Swartzendruber, James Allen, West Bend, WI 53095 (US); Hutchison, Wayne Robert, Mayville, WI 53050 (US)
(74) Vertreter: Magin, Ludwig Bernhard

(56) Entgegenhaltungen:
- US-A- 1 580 015
- US-A- 5 772 373
- US-A- 5 846 001

## Beschreibung

Die Erfindung betrifft einen Antriebswellenzusammenbau für ein Fahrzeug, mit einer Antriebswelle und einer Unterlegscheibe mit einem zumindest im wesentlichen ebenen, ringförmigen Bereich mit einer zentralen Aussparung zum Durchführen der Antriebswelle sowie einem sich von dem Bereich zumindest im wesentlichen in einem rechten Winkel erstreckenden Mitnehmer, sowie ein Fahrzeug mit einem solchen Antriebswellenzusammenbau. Ein derartiger zusammenbau ist aus der US-A-5,772,373 bekannt.

Fahrzeuge zur Rasen-, Garten- und Grundstückspflege, wie beispielsweise Rasentraktoren, weisen üblicherweise Antriebsräder auf, welche auf einer Antriebswelle durch eine Nut/Passfeder-Verbindung angebracht sind. Die Antriebsräder oder deren Naben können oftmals auf der Antriebswelle frei gleiten und wirken so Druck auf ein Getriebegehäuse in einem Bereich rund um die Welle aus. Eine nicht rotierende Unterlegscheibe, welche an dem Getriebegehäuse angreift, ist zwischen einem Endbereich des Gehäuses und dem Rad bzw. der Nabe angeordnet, um Achsdichtungen zu schützen. Nach längerem Einsatz kann die Unterlegscheibe verschleißen bzw. durchwetzen und die Dichtung nicht länger schützen. Sobald die Unterlegscheibe durchgewetzt ist und Dichtungsschäden auftreten, kann Getriebeflüssigkeit verloren werden, was zu kostenintensiven Getriebeschäden führen kann. Eine Möglichkeit das Druckverschleißproblem der Unterlegscheiben zu lösen, besteht darin, eine zweite Unterlegscheibe auf der Antriebswelle anzuordnen, welche mit der Welle mitrotiert und an der nicht drehenden Unterlegscheibe anliegt. Durch die Verwendung von zwei Unterlegscheiben können wesentlich erhöhte Standzeiten der Unterlegscheiben erzielt werden. Es hat sich jedoch herausgestellt, dass es kostenintensiv ist, die zweite Unterlegscheibe auf der rotierenden Welle durch eine Nut/Passfeder-Verbindung festzulegen, da die Naben oder Lager maschinell bearbeitet werden müssen, um passende Nuten für einen Mitnehmer vorzusehen, welcher von der Ebene der rotierenden Unterlegscheibe absteht. Eine derartige Unterlegscheibe kann beispielsweise der US-A-5,846,001 entnommen werden.

Das der Erfindung zugrunde liegende Problem wird darin gesehen, dass bekannte Antriebswellenzusammenbauten aufwendig in der Fertigung und somit teuer sind.

Dieses Problem wird erfindungsgemäß durch die Lehre der Patentansprüche 1 bzw. 10 gelöst, wobei in den weiteren Patentansprüchen die Lösung in vorteilhafter Weise weiterentwickelnde Merkmale aufgeführt sind.

Auf diese Weise wird ein Antriebswellenzusammenbau zur Verfügung gestellt, der einfach und günstig in der Herstellung ist, da keine zusätzlichen Nuten oder Kerben in die Bauteile eingebracht werden müssen, um eine Unterlegscheibe dazu zu bringen, zusammen mit der Antriebswelle bzw. einer Nabe einer Radanordnung zu drehen. Stattdessen wird eine vorhandene Nut zur Aufnahme des Mitnehmers und somit zur Erzielung einer drehfesten Verbindung genutzt. Die Nut ist Bestandteil einer Nut/Passfeder-Verbindung, welche die Nabe auf der Antriebswelle drehfest bzw. formschlüssig festlegt. Eine solche Nut ist sowohl in der Antriebswelle als auch in der Nabe vorgesehen.

Zwischen der ersten Unterlegscheibe und dem Getriebegehäuse kann eine zweite Unterlegscheibe vorgesehen sein, welche nicht mit der Antriebswelle bzw. der Nabe mitrotiert, sondern stattdessen mit dem Getriebegehäuse in einer drehfesten Art und Weise verbunden ist. Eine solche zweite Unterlegscheibe schließt das Getriebegehäuse nach außen ab und legt darin enthaltene Dichtmittel fest bzw. schützt diese vor Umwelteinflüssen, so dass einem Austreten von Getriebeflüssigkeiten entgegengewirkt wird.

Einfach in der Montage ist es, wenn der Mitnehmer in einem Endbereich der Nut eingreift. So muss die Nut nicht in einer besonderen Art und Weise ausgebildet werden, sondern sich nur bis zum Ende des Bauteils, in das sie eingeformt bzw. in das sie eingebracht ist, erstrecken. Die einzelnen Bauteile müssen darüber hinaus nicht aufwendig ineinander eingesetzt werden, sondern es genügt ein Zusammenschieben.

Es ist denkbar, dass der Mitnehmer in eine Nut in der Antriebswelle eingreift. Greift er allerdings in eine Nut ein, die in der Nabe vorgesehen ist, so vereinfacht dies die Montage bzw. vereinfacht die Ausführung, da der Mitnehmer gegen Beschädigungen geschützt in der Nabe angeordnet ist und darüber hinaus nicht in die zur Aufnahme der Antriebswelle gedachte Aussparung hineinragen muss.

Die Aussparung in der Unterlegscheibe kann unterschiedlich gestaltet werden. Ein einfaches Aufsetzen und günstiges Zusammenwirken mit der Antriebswelle ergibt sich aber insbesondere bei einer zumindest im wesentlichen kreisförmigen Ausgestaltung.

Der Mitnehmer erstreckt sich von dem Umfang der Unterlegscheibe weg, wobei eine Stirnfläche und der Mitnehmer vorzugsweise einen im wesentlichen rechten Winkel bilden. Auf diese Weise kann der Mitnehmer in der Nut geführt werden, ohne eine Neigung zum Verkanten oder Verklemmen aufzuweisen.

Sind in der Unterlegscheibe auf gegenüberliegenden Seiten des Mitnehmers Kerben vorgesehen, so begünstigt dies die Herstellung der Unterlegscheibe bzw. des Mitnehmers, da ein Biegen desselben erleichtert wird und in dem Material selbst geringere Spannungen auftreten.

Der Mitnehmer wird vorzugsweise zumindest im wesentlichen durch die Nut aufgenommen, so dass eine kompakte Anordnung entsteht und angrenzende Gebiete nicht durch den zusätzlichen Bauteil beeinträchtigt werden.

Die Unterlegscheibe weist üblicherweise zwei zumindest im wesentlichen ebene Stirnflächen auf. Ist der Biegebereich bzw. die Biegestelle derart ausgebildet, dass er/sie zumindest im wesentlichen zwischen diesen Stirnflächen liegt, so hat er keinerlei bzw. nur geringe Auswirkungen auf angrenzende Bauteile.

Ein solcher Antriebswellenzusammenbau kann an unterschiedlichen Fahrzeugen Verwendung finden. Besonders geeignet ist er aber für Fahrzeuge zur Rasen-, Garten- und Grundstückspflege, bei denen es sich beispielsweise um Aufsitzmäher, Rasentraktoren, Kehrmaschinen, Räumgeräte etc. oder auch um handgeführte Geräte handeln kann.

In der Zeichnung ist ein nachfolgend näher beschriebenes Ausführungsbeispiel der Erfindung dargestellt. Es zeigt:
- Fig. 1: eine Explosionsdarstellung eines Bereichs eines Achsgetriebes mit einer Radanordnung,
- Fig. 2: eine perspektivische Darstellung einer Nabe der Radanordnung aus Fig. 1, welche teilweise ausgeschnitten dargestellt ist,
- Fig. 3: eine vergrößerte Darstellung einer Unterlegscheibe entsprechend Fig. 1 und
- Fig. 4: eine stirnseitige Ansicht der Unterlegscheibe aus Fig. 3.

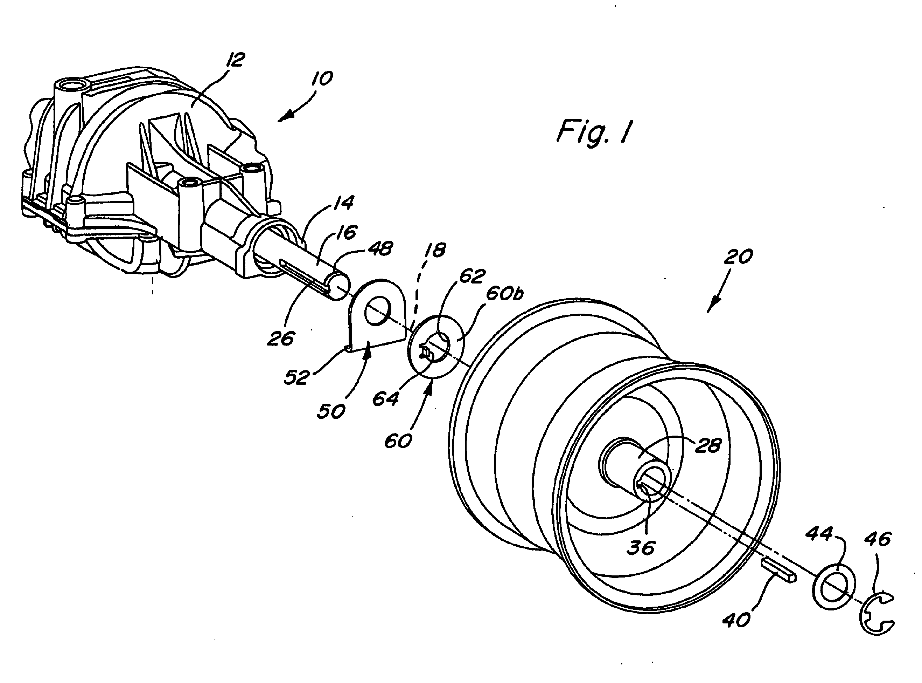

Es wird zuerst auf Fig. 1 Bezug genommen, in der ein Teil eines Getriebes oder eines Achsgetriebes 10 für einen Rasen- und Gartentraktor oder ein ähnliches Fahrzeug gezeigt wird. Das Achsgetriebe 10 weist ein Getriebegehäuse 12 mit einem Endbereich 14 auf. Eine Antriebswelle 16 erstreckt sich von dem Endbereich 14 nach außen, um um eine quer verlaufende Achse 18 zu rotieren. Eine Radanordnung 20 ist mit der Antriebswelle 16 durch eine Nut/Passfeder-Verbindung verbunden, um mit der Antriebswelle 16 um die Achse 18 zu rotieren. Eine (nicht gezeigte) Dichtanordnung im Endbereich 14 dichtet zwischen der Antriebswelle 16 und dem Getriebegehäuse 12, um Getriebeflüssigkeiten daran zu hindern, aus dem Achsgetriebe 10 auszutreten.

Die Antriebswelle 16 weist eine sich axial erstreckende Kerbe oder Nut 26 und die Radanordnung 20 eine Nabe 28 mit einer korrespondierenden Kerbe oder Nut 36 auf, welche mit der Nut 26 fluchtet, wenn die Radanordnung 20 auf die Antriebswelle 16 aufgesetzt ist. Eine Passfeder 40 mit einem rechteckigen Querschnitt, der zu den Nuten 26 und 36 passt, ist in den Nuten 26, 36 angeordnet, um die Radanordnung 20 zu einer Rotation mit der Antriebswelle 16 zu zwingen. Die Radanordnung 20 kann in axialer Richtung frei auf der Antriebswelle 16 in solcher Art und Weise gleiten, dass durch einen inneren Endbereich der Nabe 28 Druck an die Endbereiche 14 der Getriebeachse 12 abgegeben wird. Eine Unterlegscheibe 44 hält zusammen mit einem Sicherungsring 46, welcher in eine Umfangsnut 48 an einem Endbereich der Antriebswelle 16 passt, die Radanordnung 20 auf der Antriebswelle 16.

Um den inneren Endbereich der Nabe 28 daran zu hindern, sich in den Endbereich 14 einzugraben und die Dichtungen zu beschädigen, ist eine feststehende, L-förmige Unterlegscheibe 50 über die Antriebswelle 16 gegen das Getriebegehäuse 12 geschoben. Die Unterlegscheibe 50 weist einen unteren Vorsprung 52 auf, welcher an dem Getriebegehäuse 12 anliegt, um eine Drehung der Unterlegscheibe 50 zu verhindern. Um die Unterlegscheibe 50 vor einem vorzeitigen Verschleiß zu schützen bzw. von einem Durchwetzen abzuhalten, ist eine zweite Unterlegscheibe 60 über die Antriebswelle 16 gegen die äußere Oberfläche der Unterlegscheibe 50 geschoben und gezwungen mit der Nabe 28 zu rotieren. Die Druckkräfte sind daher über einen größeren Bereich verteilt, so dass Verschleiß reduziert wird und beide Unterlegscheiben 50 und 60 eine erhöhte Standzeit aufweisen.

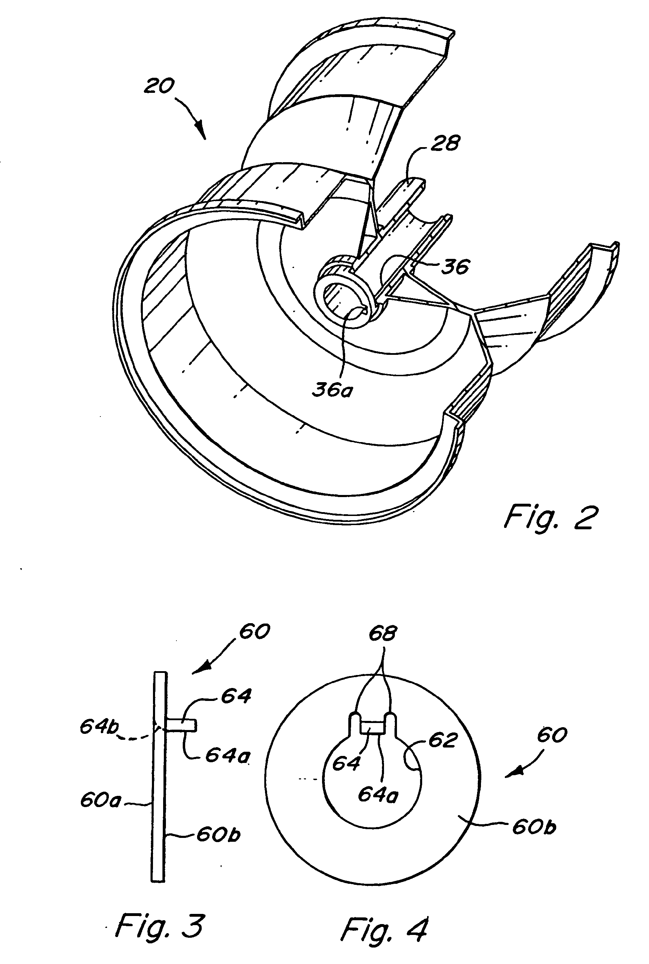

Die Unterlegscheibe 60 weist gegenüberliegende innere und äußere, ebene Stirnflächen 60a und 60b und eine zentrale Aussparung 62 mit einem Durchmesser auf, welcher den Durchmesser der Antriebswelle 16 geringfügig übersteigt. Ein Mitnehmer 64 erstreckt sich von der Unterlegscheibe 60 in einem Winkel von 90° von der Stirnfläche der Unterlegscheibe 60 an dem Umfang der Aussparung 62 nach außen, wobei ein unterer Bereich 64a des Mitnehmers 64 im wesentlichen auf dem Umfang liegt. Wie es in Fig. 2 dargestellt wird, greift der Mitnehmer 64 an inneren Endbereichen 36a der vorhandenen Nut 36 an und wird im wesentlichen in der Nut 36 aufgenommen. Der Mitnehmer 64 zwingt die Unterlegscheibe 60 dazu, mit der Nabe 28 zu rotieren, ohne hierzu eine separate, in den inneren Endbereich der Nabe 28 eingebrachte Nut zu benötigen. Abgerundete Kerben 68 erstrecken sich radial von der Aussparung 62 an den Seiten des Mitnehmers 64 angrenzend nach außen, um ein Nach-Außen-Biegen des Mitnehmers 64 zu ermöglichen, während eine starke Biegestelle aufrechterhalten wird, welche einem Brechen im Betrieb widerstehen wird. Die Anordnung stellt sicher, dass die Unterlegscheibe 60 mit einem starken Mitnehmeranschlussbereich hergestellt werden kann, ohne dass die Biegestelle (siehe 64b in Fig. 3) aus den Ebenen der gegenüberliegenden Stirnflächen der Unterlegscheiben 60 hervorragt, wodurch eine zusätzliche Nut in der Nabe 28 vermieden wird.

Im Betrieb liegt die Stirnfläche der Nabe 28 angrenzend an den inneren Endbereich 36a an der Stirnfläche 60a der Unterlegscheibe 60 an. Der Mitnehmer 64 wird durch den Endbereich 36a aufgenommen, so dass die Unterlegscheibe 60 mit der Radanordnung 20 rotiert, wenn das Achsgetriebe 10 die Antriebswelle 16 antreibt. Die innere Stirnfläche 60a der Unterlegscheibe 60 rotiert gegenüber der äußeren Stirnfläche der feststehenden Unterlegscheibe 50, um die Druckkräfte über ein verhältnismäßig großes Gebiet zu verteilen, so dass Verschleiß reduziert wird.

## Patentansprüche

1. Antriebswellenzusammenbau für ein Fahrzeug, mit einem Getriebegehäuse (12), einer sich von dem Getriebegehäuse (12) wegerstreckenden Antriebswelle (16) sowie einer auf die Antriebswelle (16) aufsetzbaren und mit dieser über eine Nut (26, 36)/Passfeder (40)-Verbindung formschlüssig verbindbaren Nabe (28) einer Radanordnung (20) und einer Unterlegscheibe (60) mit einem zumindest im wesentlichen ebenen, ringförmigen Bereich mit einer zentralen Aussparung (62) zum Durchführen der Antriebswelle (16) sowie einem sich von dem Bereich zumindest im wesentlichen in einem rechten Winkel erstreckenden Mitnehmer (64), wobei der Mitnehmer (64) durch die Nut (36) derart aufgenommen wird, dass die Unterlegscheibe (60) mit der Antriebswelle (16) rotiert.

2. Antriebswellenzusammenbau nach Anspruch 1, **gekennzeichnet durch** eine zweite Unterlegscheibe (50), welche zwischen der ersten Unterlegscheibe (60) und dem Getriebegehäuse (12) angeordnet und mit diesem rotationsfest verbunden ist.

3. Antriebswellenzusammenbau nach einem oder mehreren der vorherigen Ansprüche, **dadurch gekennzeichnet, dass** der Mitnehmer (64) in einem Endbereich (36a) der Nut (36) eingreift.

4. Antriebswellenzusammenbau nach Anspruch 3, **dadurch gekennzeichnet, dass** die Nut (36) in der Nabe (28) vorgesehen ist.

5. Antriebswellenzusammenbau nach einem oder mehreren der vorherigen Ansprüche, **dadurch gekennzeichnet, dass** die zentrale Aussparung (62) einen zumindest im wesentlichen kreisförmigen Umfang aufweist.

6. Antriebswellenzusammenbau nach Anspruch 5, **dadurch gekennzeichnet, dass** der Mitnehmer (64) sich von dem Umfang wegerstreckt.

7. Antriebswellenzusammenbau nach Anspruch 6, **dadurch gekennzeichnet, dass** die Unterlegscheibe (60) Kerben (68) aufweist, welche sich an gegenüberliegenden Seiten des Mitnehmers (64) radial von dem Umfang wegerstrecken.

8. Antriebswellenzusammenbau nach einem oder mehreren der vorherigen Ansprüche, **dadurch gekennzeichnet, dass** der Mitnehmer (64) eine Dicke aufweist, welche die Tiefe der Nut (36) nicht übersteigt.

9. Antriebswellenzusammenbau nach einem oder mehreren der vorherigen Ansprüche, **dadurch gekennzeichnet, dass** die Unterlegscheibe (60) zwei zumindest im wesentlichen ebene Stirnflächen (60a, 60b) aufweist, wobei die Biegestelle (64a) des Mitnehmers (64) zumindest im wesentlichen vollständig zwischen den Stirnflächen (60a, 60b) angeordnet ist.

10. Fahrzeug, insbesondere ein Fahrzeug zur Rasen-, Garten- und Grundstückspflege mit einem Antriebswellenzusammenbau nach einem oder mehreren der vorherigen Ansprüche.

## Claims

1. Drive shaft assembly for a vehicle, having a transmission housing (12), a drive shaft (16) which extends away from the transmission housing (12) and also a hub (28) of a wheel arrangement (20), which can be placed on the drive shaft (16) and can be connected to said drive shaft via a groove (26, 36)/feather key (40)-connection in a form-fitting manner, and having a plain washer (60) with an annular region which is at least substantially flat and has a central hole (62) for leading through the drive shaft (16) and also having a dog (64) which extends from the region at least substantially at a right angle, the dog (64) being received by means of the groove (36) such that the plain washer (60) rotates with the drive shaft (16).

2. Drive shaft assembly according to claim 1, **characterised by** a second plain washer (50), which is disposed between the first plain washer (60) and the transmission housing (12) and is connected non-rotatably to the latter.

3. Drive shaft assembly according to one or more of the preceding claims, **characterised in that** the dog (64) engages in an end region (36a) of the groove (36).

4. Drive shaft assembly according to claim 3, **characterised in that** the groove (36) is provided in the hub (28).

5. Drive shaft assembly according to one or more of the preceding claims, **characterised in that** the central hole (62) has an at least substantially circular circumference.

6. Drive shaft assembly according to claim 5, **characterised in that** the dog (64) extends away from the circumference.

7. Drive shaft assembly according to claim 6, **characterised in that** the plain washer (60) has notches (68) which extend away radially from the circumference on oppositely-situated sides of the dog (64).

8. Drive shaft assembly according to one or more of the preceding claims, **characterised in that** the dog (64) has a thickness which does not exceed the depth of the groove (36).

9. Drive shaft assembly according to one or more of the preceding claims, **characterised in that** the plain washer (60) has two end faces (60a, 60b) which are at least substantially flat, the bent point (64a) of the dog (64) being disposed at least substantially completely between the end faces (60a, 60b).

10. Vehicle, in particular a vehicle for lawn, garden and land maintenance having a drive shaft assembly according to one or more of the preceding claims.

## Revendications

1. Ensemble d'arbre de transmission pour un véhicule, comportant une boîte de vitesses (12), un arbre de transmission (16) qui part de la boîte de vitesses (12), ainsi qu'un moyeu (28), apte à être monté sur l'arbre de transmission (16) et à être assemblé par conjugaison de forme avec celui-ci au moyen d'un assemblage à rainure (26, 36) et ressort d'ajustage (40), d'un agencement de roue (20) et une rondelle (60) avec une zone annulaire au moins sensiblement plane, qui comporte un évidement central (62) destiné à laisser passer l'arbre de transmission (16), ainsi qu'un taquet d'entraînement (64), qui s'étend à partir de la zone plane au moins sensiblement à angle droit, dans lequel ensemble le taquet d'entraînement (64) est reçu dans la rainure (36) de telle sorte que la rondelle (60) tourne avec l'arbre de transmission (16).

2. Ensemble d'arbre de transmission selon la revendication 1, **caractérisé par** une deuxième rondelle (50), qui est agencée entre la première rondelle (60) et la boîte de vitesses (12) et qui est assemblée solidaire en rotation avec celui-ci.

3. Ensemble d'arbre de transmission selon une ou plusieurs des revendications précédentes, **caractérisé en ce que** le taquet d'entraînement (64) s'engage dans une zone d'extrémité (36a) de la rainure (36).

4. Ensemble d'arbre de transmission selon la revendication 3, **caractérisé en ce que** la rainure (36) est prévue dans le moyeu (28).

5. Ensemble d'arbre de transmission selon une ou plusieurs des revendications précédentes, **caractérisé en ce que** l'évidement central (62) a un pourtour au moins sensiblement circulaire.

6. Ensemble d'arbre de transmission selon la revendication 5, **caractérisé en ce que** le taquet d'entraînement (64) est orienté en s'écartant du pourtour.

7. Ensemble d'arbre de transmission selon la revendication 6, **caractérisé en ce que** la rondelle (60) comporte des encoches (68), qui s'étendent sur deux côtés opposés du taquet d'entraînement (64) en s'écartant radialement du pourtour.

8. Ensemble d'arbre de transmission selon une ou plusieurs des revendications précédentes, **caractérisé en ce que** le taquet d'entraînement (64) a une épaisseur qui n'est pas supérieure à la profondeur de la rainure (36).

9. Ensemble d'arbre de transmission selon une ou plusieurs des revendications précédentes, **caractérisé en ce que** la rondelle (60) comporte deux faces frontales (60a, 60b) au moins sensiblement planes, la zone de flexion (64b) du taquet d'entraînement (64) étant disposée au moins sensiblement en totalité entre les faces frontales (60a, 60b).

10. Véhicule, en particulier un véhicule pour l'entretien des pelouses, jardins et champs, comportant un ensemble d'arbre de transmission selon une ou plusieurs des revendications précédentes.
